# FASCICULE DE BREVET EUROPEEN

(11) **EP 2 314 488 B1**
(45) Date de publication et mention de la délivrance du brevet: **06.06.2012**
(21) Numéro de dépôt: 10176048.6
(22) Date de dépôt: 09.09.2010
(51) Int. Cl.: B60T 11/18

(54) **Installation de freins a maître-cylindre**
Bremssystem mit einem Hauptbremszylinder
Braking system comprising a master cylinder

(30) Priorité: 22.10.2009 FR 0905089
(43) Date de publication de la demande: 27.04.2011
(73) Titulaire: Robert Bosch GmbH, 70442 Stuttgart (DE)
(72) Inventeur: Richard, Philippe, 77500, Chelles (FR); Gaffe, François, 44420, La Turballe (FR); Cagnac, Bastien, 60660 Cramoisy (FR)
(74) Mandataire: Hurwic, Aleksander Wiktor

(56) Documents cités:
- FR-A1- 2 612 474
- FR-A1- 2 840 273
- FR-A1- 2 847 540
- FR-A1- 2 849 818

## Description

### Domaine de l'invention

La présente invention concerne une installation de freins à maître-cylindre et servofrein sans tige de poussée et notamment une installation de freins à maître-cylindre associé à un servofrein comportant un piston d'actionneur commandé par le moteur du servofrein et agissant sur le piston primaire du maître-cylindre par l'intermédiaire d'un disque de réaction contre lequel s'appuie le piston primaire et aussi, le cas échéant, pour le fonctionnement de secours, le piston plongeur relié à la tige de commande actionnée par la pédale de frein.

### Etat de la technique

Les systèmes de freins à maître-cylindre et servofrein utilisent, au niveau de la liaison entre le piston d'actionneur du servofrein et le piston (piston primaire) du maître-cylindre, une liaison par une tige de poussée appuyée contre le disque de réaction, côté maître-cylindre **comme décrit dans** FR 2 840 273 **ou** FR 2 612 474. Cette tige de poussée est une pièce de forme complexe, composée de deux parties : une partie arrière en forme de champignon, dont la tête plate est appliquée contre toute la face avant, côté maître-cylindre, du disque de réaction et qui porte une seconde pièce, enfichée dans la tige de la première pour venir s'appuyer contre le fond du piston primaire.

Lors de l'assemblage du maître-cylindre et du servofrein, on mesure d'abord la course morte entre le disque de réaction de l'actionneur et le piston primaire et on adapte la longueur de la tige de poussée en la comprimant en fonction de ce qui est nécessaire pour limiter la course morte.

Cette réalisation, relativement compliquée et coûteuse à mettre en oeuvre, est nécessaire à cause des tolérances de fabrication et de montage qui existent au niveau du piston d'actionneur.

### But de l'invention

La présente invention a pour but de développer un système de freins à maître-cylindre et servofrein à piston d'actionneur muni d'un disque de réaction, de façon à simplifier la coopération entre le piston d'actionneur et le piston primaire du maître-cylindre en fonctionnement normal et aussi en fonctionnement de secours lorsque le piston plongeur du servofrein agit sur le piston primaire du maître-cylindre par l'intermédiaire du disque de réaction.

### Exposé et avantages de l'invention

A cet effet, la présente invention concerne un système de freins du type défini ci-dessus caractérisé en ce que
- le piston d'actionneur combiné à un piston auxiliaire pour coopérer avec le disque de réaction côté maître-cylindre, est guidé dans un alésage du corps du servofrein,
- une rondelle adaptatrice portée par le piston auxiliaire est destinée à recevoir l'extrémité d'une tige arrière solidaire du piston primaire du maître-cylindre),
- l'épaisseur de la rondelle adaptatrice étant définie au montage du maître-cylindre et du servofrein en fonction de la course morte mesurée préalablement.

L'invention permet de simplifier globalement la réalisation du système de freins grâce à la réduction du défaut axial et de coaxialité du piston d'actionneur par rapport au maître-cylindre. Cette réduction des tolérances permet d'agir directement sur le piston primaire par l'intermédiaire du disque de réaction grâce au piston primaire dont la partie arrière s'appuie contre la rondelle adaptatrice du piston auxiliaire ; le piston auxiliaire avec sa rondelle adaptatrice étant réglé en épaisseur en fonction de la course morte déterminée avant assemblage du servofrein et du maître-cylindre.

De façon générale, la course morte est due à la fermeture des circuits hydrauliques dans le maître-cylindre. La course morte est en effet synonyme de course morte hydraulique ou de course morte dans le maître-cylindre.

Dans certaines conditions de fabrication, il est préférable d'uniformiser la fabrication du piston auxiliaire et de rajouter à celui-ci, des rondelles adaptatrices d'épaisseur différente. Mais d'autres solutions particulières sont envisageables selon l'invention pour adapter cette épaisseur à la course morte mesurée préalablement comme cela sera vu ci-après.

Globalement, l'invention permet de réduire le coût d'usinage du piston du maître-cylindre puisqu'il n'y a usinage que d'un seul côté et suppression de la tige de poussée.

Suivant une autre caractéristique avantageuse, la rondelle adaptatrice est intégrée au piston auxiliaire de façon à ne former qu'une seule pièce. Au montage de l'installation, après avoir mesuré la course morte, on choisit l'ensemble rondelle adaptatrice/piston auxiliaire dont l'épaisseur correspond à la course morte.

Suivant une autre caractéristique, la rondelle adaptatrice est usinée en fonction de la course morte mesurée pour régler la distance entre la tige de piston primaire et le piston d'actionneur, c'est-à-dire l'intervalle entre l'extrémité de la tige de piston primaire et la face côté maître-cylindre du disque de réaction.

Cela permet de compenser efficacement les défauts de la course morte dans le cas général évoqué ci-dessus ou dans les cas particuliers de la rondelle adaptatrice simplifiant la fabrication des différentes pièces et leur montage. Cela permet par exemple d'avoir dans le maître-cylindre, une course morte de l'ordre de 1,2 ± 0,1 mm.

Suivant une caractéristique avantageuse, le piston d'actionneur se compose d'une collerette avant, située du côté du maître-cylindre et définissant un logement recevant le disque de réaction ainsi que le piston auxiliaire et sa rondelle adaptatrice, la face arrière du disque de réaction étant exposée dans l'alésage du manchon du piston d'actionneur pour recevoir le piston plongeur et en être séparée de la distance de saut.

Cette forme de réalisation permet un guidage particulièrement efficace du piston d'actionneur tout en utilisant sa longueur servant au guidage du piston plongeur, grâce à la périphérie extérieure du manchon guidée dans un alésage du corps du boîtier de servomoteur de façon à garantir l'alignement suivant l'axe du système et permettre la compensation efficace et simple de la course morte entre le maître-cylindre et le servofrein.

### Dessins

La présente invention sera décrite de manière plus détaillée à l'aide d'un exemple de réalisation représenté dans les dessins annexés dans lesquels :
- la figure 1 est une coupe schématique partielle d'un système de freins à maître-cylindre et servofrein selon l'état de la technique,
- la figure 2 est une vue schématique à échelle agrandie d'une partie d'un système de freins à maître-cylindre et servofrein selon l'invention, représenté en coupe axiale.

### Description d'un mode de réalisation de l'invention

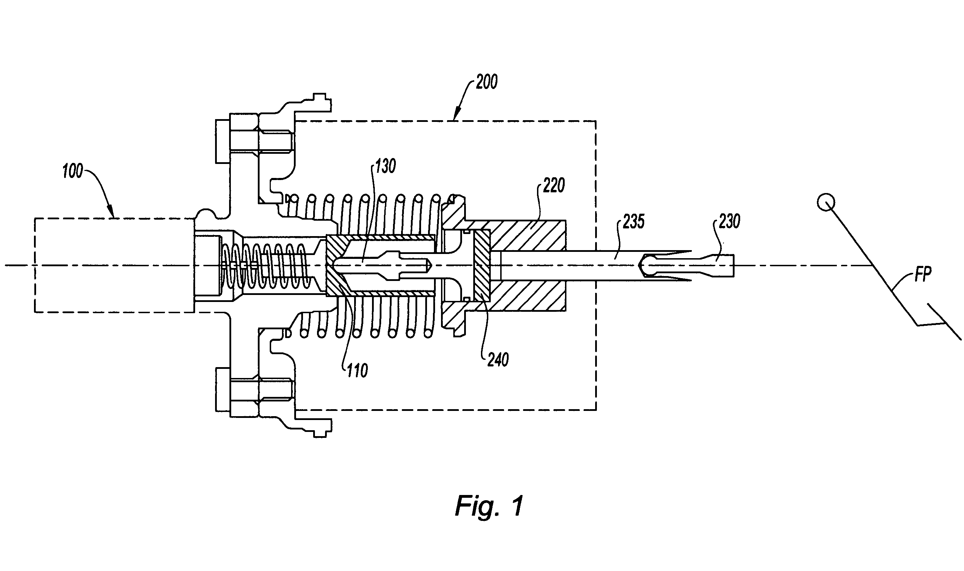

La figure 1 montre un système de freins équipé d'un maître-cylindre et d'un servofrein selon l'état de la technique, destiné à faciliter la description et la présentation de l'invention.

Ce système de freins se compose d'un maître-cylindre 100, ici d'un maître-cylindre tandem, combiné à un servofrein 200. Du maître-cylindre n'est représentée pratiquement que sa partie associée directement au servofrein et ce dernier n'est représenté que par son piston d'actionneur 220, logeant le disque de réaction 240 pour s'appuyer sur le piston primaire 110 du maître-cylindre par l'intermédiaire d'une tige de poussée 130, ainsi que le piston plongeur 235 avec la tige de commande 230 elle-même reliée à la pédale de frein PF. Les différents moyens tels que le détecteur de déplacement du piston plongeur 235 et/ou de la tige de commande 230 pour mettre en oeuvre le servofrein 200 ne sont pas représentés. N'est pas non plus représenté le moteur du servofrein qui commande le déplacement du piston d'actionneur 220 en fonction du signal de déplacement collecté au niveau du piston plongeur et/ou de la tige de commande.

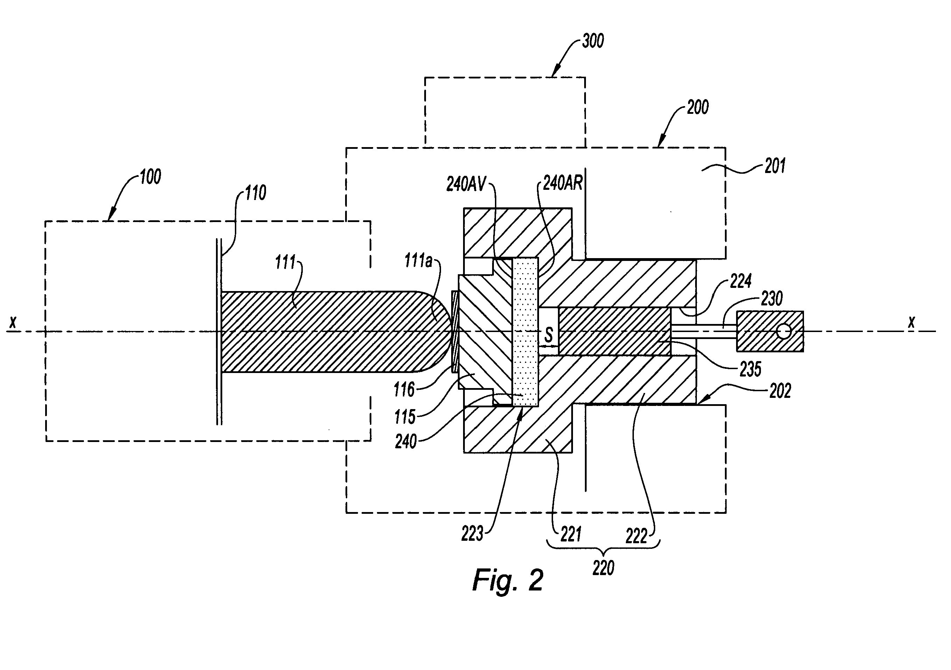

A la figure 2, le système de freins à servofrein selon l'invention se compose d'un maître-cylindre 100 dont le piston d'actionneur 110 est muni sur sa face arrière d'une tige arrière 111, dirigée vers le servofrein 200. Le servofrein 200 se compose d'un corps de servofrein 201 non détaillé avec un moteur 300 pour entraîner un piston d'actionneur 220 composé de deux parties : une partie avant avec une collerette 221 du côté du maître-cylindre 100 et une partie arrière en forme de manchon 222 coulissant dans un alésage de guidage 202 réalisé dans le corps 201 du servofrein 200. La collerette 221 forme un logement 223 recevant le disque de réaction 240 contre lequel s'appuie, côté maître-cylindre (côté gauche), un piston auxiliaire 115 muni d'une rondelle adaptatrice 116 pour recevoir l'extrémité, de préférence arrondie 111a, de la tige arrière 111 du piston primaire 110.

Le manchon 222 du piston d'actionneur 220 comporte un alésage 224 recevant le piston plongeur 235 coopérant avec la face arrière 240AR du disque de réaction 240. Le piston plongeur 235 est relié par la tige de commande 230 à la pédale de frein. En fonctionnement normal, la face avant du piston plongeur est écartée de la face arrière 240AR du disque de réaction 240 de la distance de saut S. Le piston auxiliaire 115 est appuyé par toute sa surface contre la face avant 240AV du disque de réaction 240.

Le moyen de détection du mouvement du piston plongeur 235 et/ou de la tige de commande 230 n'est pas représenté de même que la transmission de l'entraînement du moteur 300 au piston d'actionneur 220.

En mode de fonctionnement normal, c'est-à-dire lorsque le servofrein 200 fonctionne normalement, le piston plongeur 235 n'est pas en contact avec le disque de réaction 225 dont il est séparé de la distance de saut S. Le déplacement du piston plongeur 235 sous l'effet de l'actionnement de la pédale de frein, produit la mise en oeuvre du servofrein 200 qui déplace le piston d'actionneur 220 pour pousser la tige arrière 111 et ainsi le piston primaire 110 du maître-cylindre 100. Le fonctionnement du maître-cylindre 100 est connu en soi. Il s'agit en général d'un maître-cylindre tandem avec un piston secondaire définissant une chambre secondaire, le piston primaire définissant une chambre primaire, chacune de ces chambres étant reliée à un circuit de frein.

En mode de fonctionnement de secours, lorsque le servofrein 200 est défaillant, il ne réagit pas au mouvement d'avancée du piston plongeur 235 qui parcourt la distance de saut S et vient alors s'appuyer contre la face arrière 240AR du disque de réaction 240 et pousse (et déforme) celui-ci de manière à ce qu'il pousse le piston auxiliaire 115 et la tige arrière 111 par l'intermédiaire de la rondelle adaptatrice 116.

L'axe XX est celui du maître-cylindre 100, de sa tige arrière 111, du servofrein 200 et de son piston d'actionneur 220.

L'alignement entre le servofrein 200 et le maître-cylindre 100 suivant cet axe XX est parfaitement respecté lorsque ces deux éléments sont assemblés grâce à l'alésage de guidage 223 du piston plongeur 235.

Dans le mode de réalisation représenté à la figure 2, le piston auxiliaire 220 est une pièce distincte de la rondelle adaptatrice 116, qui est toutefois fixée au piston auxiliaire 115 par des moyens non représentés. Cette fixation est par exemple une soudure.

Au moment du montage, c'est-à-dire de l'assemblage du maître-cylindre 100 et du servofrein 200, après avoir mesuré de façon habituelle, la course morte, mais tenant compte ici de la tige arrière 111 et de la géométrie du servofrein, on choisit le piston auxiliaire 115 portant la rondelle adaptatrice 116 d'épaisseur convenable pour éviter la course morte. Ce réglage est fait pour chaque système de maître-cylindre et servofrein.

Selon une variante non représentée, le piston auxiliaire 115 et la rondelle adaptatrice 116 sont en une seule pièce. L'épaisseur de cette pièce sera choisie en fonction de la course morte mais il est également possible de donner à la rondelle adaptatrice, l'épaisseur nécessaire dans chaque cas en meulant celle-ci en fonction de la dimension requise, c'est-à-dire de l'épaisseur de l'ensemble du piston auxiliaire 115 et de rondelle adaptative 116 dans la direction axiale XX.

Globalement, grâce à la poussée directe sur le piston primaire à travers le disque de réaction, l'invention permet de réduire le coût de fabrication du piston du maître-cylindre, c'est-à-dire du piston primaire puisqu'il ne nécessite qu'un usinage d'un seul côté. On supprime également la tige de poussée qui est un organe de forme relativement complexe.

La présente invention concerne le domaine des systèmes de freins de véhicules automobiles et l'industrie de fabrication de tels systèmes de freins.

### NOMENCLATURE

- 100: maître-cylindre
- 110: piston primaire
- 111: tige arrière
- 115: piston auxiliaire
- 116: rondelle adaptatrice
- 130: tige de poussée

- 200: servofrein
- 202: alésage de guidage
- 201: corps du servofrein
- 220: piston d'actionneur
- 221: collerette
- 222: manchon
- 223: logement
- 224: alésage
- 230: tige de commande
- 235: piston plongeur
- 240: disque de réaction
- 240AV: face avant
- 240AR: face arrière

- 300: moteur

- PF: pédale de frein
- XX: axe
- S: saut

## Revendications

1. Installation de freins à maître-cylindre associé à un servofrein comportant un piston d'actionneur commandé par le moteur du servofrein et agissant sur le piston primaire du maître-cylindre par l'intermédiaire d'un disque de réaction contre lequel s'appuie le piston primaire et aussi, le cas échéant, pour le fonctionnement de secours, le piston plongeur relié à la tige de commande actionnée par la pédale de frein, **caractérisée en ce que**
- le piston d'actionneur (220) combiné à un piston auxiliaire (115) pour coopérer avec le disque de réaction (240) côté maître-cylindre (100), est guidé dans un alésage (202) du corps (201) du servofrein (200),
- une rondelle adaptatrice (116) portée par le piston auxiliaire (115) est destinée à recevoir l'extrémité (111a) d'une tige arrière (111) solidaire du piston primaire (110) du maître-cylindre (100),

2. Installation de freins selon la revendication 1,
**caractérisée en ce que**
la rondelle adaptatrice (116) est intégrée au piston auxiliaire (115).

3. Installation de freins selon la revendication 1,
**caractérisée en ce que**
la rondelle adaptatrice (116) est usinée en fonction de la course morte pour régler la distance entre la tige de piston primaire et le piston d'actionneur.

4. Installation de freins selon la revendication 1,
**caractérisée en ce que**
le piston d'actionneur (200) se compose d'une collerette (221) avant, située du côté du maître-cylindre et définissant un logement (223) recevant le disque de réaction (240) ainsi que le piston auxiliaire (115) et sa rondelle adaptatrice (116), la face arrière (240AR) du disque de réaction (240) étant exposée dans l'alésage (224) du manchon (222) du piston d'actionneur (220) pour recevoir le piston plongeur (234) et en être séparée de la distance de saut (S).

## Claims

1. Brake installation with master cylinder associated with a brake booster comprising an actuator piston controlled by the motor of the brake booster and acting on the primary piston of the master cylinder by means of a reaction disk against which the primary piston rests and also, if necessary, for a safety operation, the hydraulic actuator connected to the control rod actuated by the brake pedal,
**characterized in that**
- the actuator piston (220) combined with an auxiliary piston (115) in order to interact with the reaction disk (240) on the side of the master cylinder (100), is guided in a bore (202) of the body (201) of the brake booster (200),
- an adapting shim (116) supported by the auxiliary piston (115) is designed to receive the end (111a) of a rear rod (111) secured to the primary piston (110) of the master cylinder (100),

2. Brake installation according to Claim 1,
**characterized in that**
the adapting shim (116) is incorporated into the auxiliary piston (115).

3. Brake installation according to Claim 1,
**characterized in that**
the adapting shim (116) is machined as a function of the free travel in order to adjust the distance between the primary piston rod and the actuator piston.

4. Brake installation according to Claim 1,
**characterized in that**
the actuator piston (200) consists of a front collar (221), situated on the side of the master cylinder and defining a housing (223) receiving the reaction disk (240) and the auxiliary piston (115) and its adapting shim (116), the rear face (240AR) of the reaction disk (240) being exposed in the bore (224) of the sleeve (222) of the actuator piston (220) in order to receive the hydraulic actuator (234) and be separated therefrom by the skip distance (S).

## Patentansprüche

1. Bremsanlage mit einem Hauptzylinder, der einer Servobremse zugeordnet ist, die einen Aktorkolben aufweist, der von dem Motor der Servobremse gesteuert wird und über eine Reaktionsscheibe auf den Primärkolben des Hauptzylinders einwirkt, wobei sich an der Reaktionsscheibe der Primärkolben und gegebenenfalls für den Notbetrieb auch der Tauchkolben abstützen, welcher mit der von dem Bremspedal betätigten Steuerstange verbunden ist,
**dadurch gekennzeichnet, dass**
- der Primärkolben (220), der für die Zusammenwirkung mit der Reaktionsscheibe (240) auf der Seite des Hauptzylinders (100) mit einem Hilfskolben (115) kombiniert ist, in einer Bohrung (202) des Körpers (201) der Servobremse (200) geführt ist,
- eine am Hilfskolben (115) angeordnete Einstellscheibe (116) dazu vorgesehen ist, das Ende (111a) einer hinteren Stange (111) aufzunehmen, die mit dem Primärkolben (110) des Hauptzylinders (100) fest verbunden ist.

2. Bremsanlage nach Anspruch 1,
**dadurch gekennzeichnet, dass**
die Einstellscheibe (116) in den Hilfskolben (115) integriert ist.

3. Bremsanlage nach Anspruch 1,
**dadurch gekennzeichnet, dass**
die Einstellscheibe (116) in Abhängigkeit von dem Totgang bearbeitet ist, um den Abstand zwischen der Stange des Primärkolbens und dem Aktorkolben einzustellen.

4. Bremsanlage nach Anspruch 1,
**dadurch gekennzeichnet, dass**
der Aktorkolben (200) sich aus einem vorderen Kragen (221) zusammensetzt, der auf der Seite des Hauptzylinders angeordnet ist und eine Aufnahme (223) begrenzt, die die Reaktionsscheibe (240) sowie den Hilfskolben (115) und seine Einstellscheibe (116) aufnimmt, wobei die hintere Fläche (240AR) der Reaktionsscheibe (240) in der Bohrung (224) der Muffe (222) des Aktorkolbens (220) freiliegt, um den Tauchkolben (234) aufzunehmen und mit dem Sprungabstand (S) von diesem entfernt zu sein.
